# EUROPÄISCHE PATENTANMELDUNG

(11) **EP 3 508 839 A1**
(43) Veröffentlichungstag der Anmeldung: **10.07.2019**
(21) Anmeldenummer: 18208992.0
(22) Anmeldetag: 28.11.2018
(51) Int. Cl.: G01N 21/94, G01B 11/30, H02S 40/10

(54) **VORRICHTUNG UND VERFAHREN ZUR QUANTITATIVEN ANALYSE DER VERSCHMUTZUNG VON OBERFLÄCHEN**

(30) Priorität: 04.12.2017 DE 102017221843
(71) Anmelder: FRAUNHOFER-GESELLSCHAFT zur Förderung der angewandten Forschung e.V., 80686 München (DE)
(72) Erfinder: Brachmann, Stefan, 79297 Winden (DE); Kletterer, Jürgen, 79256 Buchenbach (DE)
(74) Vertreter: Pfenning, Meinig & Partner mbB

(57) **Zusammenfassung**

Die vorliegende Erfindung betrifft eine Vorrichtung zur quantitativen Analyse der Verschmutzung von Oberflächen. Diese umfasst eine mindestens eine Strahlungsquelle enthaltende Strahlungsquelleneinheit, eine mindestens einen Strahlungsdetektor enthaltende Strahlungsdetektoreinheit, eine Halterung, durch welche die Strahlungsquelleneinheit und die Strahlungsdetektoreinheit fixiert sind und eine Steuereinheit zur Steuerung der Vorrichtung sowie zur Auswertung eines im Strahlungsdetektor erzeugten Signals. Ferner umfasst die Vorrichtung ein optisches Filterelement und/oder ein elektronisches Filterelement. Zudem betrifft die vorliegende Erfindung auch ein Verfahren zur quantitativen Analyse der Verschmutzung von Oberflächen. Die erfindungsgemäße Vorrichtung bzw. das erfindungsgemäße Verfahren ermöglichen eine einfache und zuverlässige sowie zeit- und kostensparende Beurteilung der Staub- und Schmutzbelastung auf Oberflächen, wie z.B. auf Oberflächen von Photovoltaik-Modulen (PV-Modulen).

## Beschreibung

Die vorliegende Erfindung betrifft eine Vorrichtung zur quantitativen Analyse der Verschmutzung von Oberflächen. Diese umfasst eine mindestens eine Strahlungsquelle enthaltende Strahlungsquelleneinheit, eine mindestens einen Strahlungsdetektor enthaltende Strahlungsdetektoreinheit, eine Halterung, durch welche die Strahlungsquelleneinheit und die Strahlungsdetektoreinheit fixiert sind und eine Steuereinheit zur Steuerung der Vorrichtung sowie zur Auswertung eines im Strahlungsdetektor erzeugten Signals. Ferner umfasst die Vorrichtung ein optisches Filterelement und/oder ein elektronisches Filterelement. Zudem betrifft die vorliegende Erfindung auch ein Verfahren zur quantitativen Analyse der Verschmutzung von Oberflächen. Die erfindungsgemäße Vorrichtung bzw. das erfindungsgemäße Verfahren ermöglichen eine einfache und zuverlässige sowie zeit- und kostensparende Beurteilung der Staub- und Schmutzbelastung auf Oberflächen, wie z.B. auf Oberflächen von Photovoltaik-Modulen (PV-Modulen).

Die Nutzung von Solarenergie ist in Deutschland eine weit verbreitete Art der Energiegewinnung. Die Sonne stellt durch ihre quasi unerschöpflich zur Verfügung stehende Energie einen Hoffnungsträger für eine nachhaltige und umweltfreundliche Versorgung unseres Energiebedarfs dar. Neben dem Potential, das die Solartechnik mit sich bringt, gibt es zugleich auch viele neue Herausforderungen, die bewältigt werden müssen. Eine besondere Herausforderung ist die Verschmutzung von Solarmodulen in ariden Gebieten, wie jene rund um den Sonnengürtel. Die Verschmutzung, die sich meist durch Staub oder andere feste umherfliegende Partikel ausprägt, ist im Fachjargon unter dem Begriff "Soiling" bekannt.

Gerade in einstrahlungsstarken Regionen sind hohe Staub- und Sandkonzentrationen zu verzeichnen. Dies führt dazu, dass sich vermehrt Partikel auf den Solarmodulen ablagern. Diese Ablagerungen führen zu einer Verschattung der Module und somit zu einer Reduzierung des Ertrages, da nur noch ein Bruchteil des einfallenden Sonnenlichts die Solarzellen erreichen kann. Eine effiziente Nutzung der Sonneneinstrahlung ist somit ausgeschlossen. Soiling kann dabei zu Ertragseinbußen von bis zu 80 % innerhalb weniger Monate führen.

Aus diesem Grund ist eine Reinigung der Module unabdingbar. Diese Reinigungen sind jedoch aufwendig und mit hohen Kosten verbunden, da sauberes Wasser in solchen Regionen meist sehr kostbar ist. Folglich versucht man, diese Reinigungsprozesse auf ein Minimum zu reduzieren.

Da PV-Module in sehr großer Stückzahl eingesetzt werden, ist ein kostengünstiges Messverfahren wichtig. Das übliche Verfahren zur Quantifizierung der Soiling-Verluste auf Freibewitterungsanlagen vergleicht die Leistung von Modulen vor und nach einer Reinigung. Die Leistung der Module zum jeweiligen Zeitpunkt kann dabei bestimmt werden, indem der Strom und die Spannung am entsprechenden Arbeitspunkt miteinander multipliziert werden. Strom und Spannung sind dabei von der einfallenden Lichtintensität und der Temperatur abhängig. Der Strom ist dabei direkt proportional zum einfallenden Licht, wohingegen die Spannung nahezu unabhängig davon ist. Sie hängt hauptsächlich von der Temperatur ab.

Dieses Verfahren gilt als einfach und zuverlässig, jedoch auch als zeit- und kostenintensiv, da ständig ein Mitarbeiter vor Ort sein muss, um das Referenzmodul sauber zu halten oder ein zusätzliches Reinigungssystem auf dem Referenzmodul installiert werden muss. Um mögliche Fehlinterpretationen zu vermeiden, ist es außerdem wichtig, auf möglichst identische Strahlungs- und Umweltbedingungen der untersuchten Module zu achten, da Bestrahlungsstärke sowie die Temperatur für die umsetzbare Leistung ausschlaggebend sind.

Ausgehend hiervon war es somit die Aufgabe der vorliegenden Erfindung, eine Vorrichtung zur quantitativen Analyse der Verschmutzung von Oberflächen bereitzustellen, mit welcher die Verschmutzung auf Oberflächen, wie z.B. der Oberflächen von PV-Modulen, sowohl auf einfache und zuverlässige als auch auf zeit- und kostensparende Weise quantitativ analysiert werden kann.

Diese Aufgabe wird bezüglich einer Vorrichtung mit den Merkmalen des Patentanspruchs 1 und bezüglich eines Verfahrens mit den Merkmalen des Patentanspruchs 10 gelöst. Die abhängigen Patentansprüche stellen vorteilhafte Weiterbildungen dar.

Erfindungsgemäß wird somit eine Vorrichtung zur quantitativen Analyse der Verschmutzung von Oberflächen angegeben, welche eine mindestens eine Strahlungsquelle enthaltende Strahlungsquelleneinheit, eine mindestens einen Strahlungsdetektor enthaltende Strahlungsdetektoreinheit, eine Halterung, durch welche die Strahlungsquelleneinheit und die Strahlungsdetektoreinheit fixiert sind und eine Steuereinheit zur Steuerung der Vorrichtung sowie zur Auswertung eines im Strahlungsdetektors erzeugten Signals umfasst. Durch die Halterung sind die Strahlungsquelleneinheit und die Strahlungsdetektoreinheit dabei so fixiert, dass von der Strahlungsquelle abgestrahlte Strahlung direkt auf eine zu analysierende Oberfläche treffen und von dieser zumindest teilweise reflektiert werden kann und zumindest ein Teil der so reflektierten Strahlung vom Strahlungsdetektor detektiert werden kann. Zudem umfasst die erfindungsgemäße Vorrichtung ein optisches Filterelement zur Filterung von auf den Strahlungsdetektor treffenden Strahlung und/oder ein elektronisches Filterelement zur Filterung des im Strahlungsdetektor erzeugten Signals.

Die erfindungsgemäße Vorrichtung basiert auf dem Prinzip einer Reflexionsmessung, insbesondere einer Intensitätsmessung der gerichteten Reflexion. Die Vorrichtung kann dabei so an einer zu analysierenden Oberfläche, wie z.B. der Oberfläche eines PV-Moduls, positioniert werden, dass die Strahlungsquelle und der Strahlungsdetektor in einer Reflexionsanordnung sind. In einer solchen Anordnung, kann die von der Strahlungsquelle abgestrahlte Strahlung direkt auf die zu analysierende Oberfläche treffen und von dieser zumindest teilweise reflektiert werden, wobei zumindest ein Teil der so reflektierten Strahlung vom Strahlungsdetektor detektiert werden kann. Diese Reflexionsanordnung richtet sich letztlich nach dem Reflexionsgesetz, welches besagt, dass bei einer Reflexion von Strahlung an einer Oberfläche der Einfallswinkel der einfallenden Strahlung gleich dem Ausfallswinkel der reflektierten Strahlung ist, wobei der Einfallswinkel als der Winkel zwischen einfallender Strahlung und dem Lot der reflektierenden Oberfläche definiert ist und der Ausfallswinkel als der Winkel zwischen reflektierter Strahlung und dem Lot der reflektierenden Oberfläche definiert ist.

Der Strahlungsdetektor kann die von der Strahlungsquelle abgestrahlte und der zu analysierenden Oberfläche reflektierte Strahlung detektieren und in ein Signal umwandeln. Dieses erzeugte Signal kann anschließend in der Steuereinheit ausgewertet werden. Beispielsweise kann bei der Auswertung in der Steuereinheit das Signal in einen Messwert umgewandelt werden, welcher in der Steuereinheit gespeichert und/oder auf einer Anzeige angezeigt werden kann. Dieser Messwert lässt dann einen Rückschluss auf den Grad der Verschmutzung der Oberfläche zu, wobei zuvor noch eine Kalibrierung hinsichtlich des (regionalen) Anwendungsortes bzw. der an diesem Ort vorkommenden Staubart (z.B. Verschmutzung durch in China vorkommenden Staub oder durch in Saudi Arabien vorkommenden Staub) vorgenommen werden kann.

In der vorliegenden Erfindung wird dabei ausgenutzt, dass mit steigender Verschmutzung der zu analysierenden Oberfläche die Intensität der vom Strahlungsdetektor detektierten Strahlung sinkt, da bei einer vergleichsweise hohen Verschmutzung der Oberfläche weniger Strahlung von der Oberfläche in Richtung des Strahlungsdetektors reflektiert wird als bei einer vergleichsweise niedrigen Verschmutzung der Oberfläche. Der Grad der Verschmutzung einer zu analysierenden Oberfläche hat also direkten Einfluss auf die Intensität der vom Strahlungsdetektor detektierten Strahlung und somit auf das vom Strahlungsdetektor erzeugte Signal. Aufgrund der Abhängigkeit zwischen der Intensität der gerichteten Reflexion und der Verschmutzung der Oberfläche kann so auf unkomplizierte Weise mittels einer optischen Reflexionsmessung die Verschmutzung der Oberfläche quantitativ analysiert werden. Da die Vorrichtung aus einfachen und kostengünstigen Komponenten besteht, ist die Analyse zudem sehr kostengünstig. Im Weiteren verläuft die Messung mit der erfindungsgemäßen Vorrichtung sehr schnell und bedarf nicht der Anwesenheit eines Mitarbeiters vor Ort, wodurch ebenfalls eine zeit- und kostengünstige Analyse ermöglicht wird.

Durch die Halterung in der erfindungsgemäßen Vorrichtung kann auf einfache Weise erreicht werden, dass die Strahlungsquelleneinheit und die Strahlungsdetektoreinheit in der richtigen Position zueinander fixiert sind, d.h. in so einer Position, dass sich beim Positionieren der Vorrichtung an einer zu analysierenden Oberfläche, die Strahlungsquelle und der Strahlungsdetektor in Reflexionsanordnung befinden.

Die Strahlungsquelleneinheit und die Strahlungsdetektoreinheit sind erfindungsgemäß so fixiert, dass die von der Strahlungsquelle abgestrahlte Strahlung direkt auf eine zu analysierende Oberfläche treffen kann. Dies bedeutet, dass die Anordnung so gewählt ist, dass die Strahlung auf dem Weg von der Strahlungsquelle zur zu analysierenden Oberfläche nicht (einmal oder mehrmals) reflektiert wird und dass die Strahlung auf diesem Weg nicht irgendwelche Hindernisse, wie z.B. eine Glasscheibe, passieren muss. Zudem bedeutet dies im Falle eines PV-Moduls oder einer Glasscheibe auch, dass die Strahlungsquelleneinheit und die Strahlungsdetektoreinheit so fixiert sind, dass die Strahlung der Strahlungsquelle direkt auf die zu analysierende Seite (z.B. die Vorderseite) des PV-Moduls bzw. der Glasscheibe, also eben auf die zu analysierende Oberfläche, treffen kann, ohne vorher auf die andere Seite (z.B. die Rückseite) des PV-Moduls bzw. der Glasscheibe zu treffen und das PV-Modul bzw. die Glasscheibe zu passieren. Dadurch, dass die von der Strahlungsquelle abgestrahlte Strahlung direkt auf eine zu analysierende Oberfläche treffen kann, kann die Genauigkeit von mit der erfindungsgemäßen Vorrichtung durchgeführten Messungen erhöht werden, da weniger Strahlung der Strahlungsquelle auf dem Weg zu einer zu untersuchenden Oberfläche durch Wechselwirkung mit anderen Grenzflächen verloren geht und somit Verfälschungen der Ergebnisse, die durch solch ungewollt verloren gegangene Strahlung verursacht werden, vermieden werden können.

Erfindungsgemäß umfasst die Vorrichtung ein optisches Filterelement zur Filterung von (sämtlicher) auf den Strahlungsdetektor treffender Strahlung und/oder ein elektronisches Filterelement zur Filterung des im Strahlungsdetektor erzeugten Signals. Das optische Filterelement soll hierbei die auf den Strahlungsdetektor treffende und von diesem detektierte Strahlung zuvor filtern, sodass lediglich die vom optischen Filterelement gefilterte Strahlung auf den Strahlungsdetektor trifft und von diesem detektiert wird. Das elektronische Filterelement soll hingegen das im Strahlungsdetektor erzeugte Signal filtern. Die erfindungsgemäß Vorrichtung kann lediglich ein Filterelement, d.h. ein optisches Filterelement oder ein elektronisches Filterelement enthalten. Die erfindungsgemäße Vorrichtung kann aber auch ein optisches Filterelement und ein elektronisches Filterelement enthalten.

Die Anwesenheit eines optischen Filterelements und/oder elektronischen Filterelements in der erfindungsgemäßen Vorrichtung ist wesentlich, damit die mit der erfindungsgemäßen Vorrichtung vorgenommene Messung nicht durch äußere Fremdstrahlung verfälscht wird. Hierbei ist zu berücksichtigen, dass der Strahlungsdetektor nicht nur die von der Strahlungsquelle abgestrahlte und von der zu analysierenden Oberfläche reflektierte Strahlung auffangen kann, sondern auch sämtliche andere Strahlung, welche bei der Messung zugegen ist, wie z.B. Sonnenlicht oder Licht von Straßenlampen. Hierbei ist der auf die Strahlung der Strahlungsquelle zurückzuführende Anteil in der Regel deutlich kleiner als der auf Fremdstrahlung zurückzuführende Anteil, weswegen die Filterung der Strahlung bzw. des Signals bei der vorliegenden Erfindung von besonderer Bedeutung ist. Durch das optische Filterelement kann nun nur die Strahlung durchgelassen werden, welche aus der Strahlungsquelle stammt, wohingegen die Fremdstrahlung herausgefiltert wird. Entsprechend kann durch das elektronische Filterelement nur der Teil des Signals durchgelassen werden, welcher aus der Strahlung der Strahlungsquelle resultiert, wohingegen der restliche Anteil, welcher aus Fremdstrahlung resultiert, herausgefiltert wird. Auf diese Weise kann sichergestellt werden, dass bei der Auswertung des Signals in der Steuereinheit auch tatsächlich nur der Anteil der Strahlung berücksichtigt wird, welcher für die Reflexionsmessung relevant ist, d.h. die von der Strahlungsquelle abgestrahlte und von der zu analysierenden Oberfläche reflektierte Strahlung.

Aufgrund der Verwendung eines Filterelementes eignet sich die erfindungsgemäße Vorrichtung somit insbesondere zur einfachen und unkomplizierten quantitativen Analyse der Verschmutzung von PV-Modulen, da somit eine vom Zeitpunkt unabhängige Analyse der Verschmutzung während des laufenden Betriebs des PV-Moduls möglich ist, weil die Messung mit der erfindungsgemäßen Vorrichtung trotz äußerer Lichteinflüsse, welche z.B. durch Sonnenlicht und Straßenbeleuchtung gegeben sind, fehlerfrei durchgeführt werden kann.

Das optische Filterelement kann in der Strahlungsdetektoreinheit enthalten sein. Auf diese Weise kann erreicht werden, dass keine ungefilterte Strahlung auf den Strahlungsdetektor trifft, sondern stattdessen sämtliche auf den Strahlungsdetektor treffende Strahlung zuvor durch das optische Filterelement gefiltert wird. Zudem kann auf diese Weise der Strahlungsdetektor vor Staub sowie vor starkem parasitärem Streulicht geschützt werden.

Die erfindungsgemäße Vorrichtung ist zur mobilen Anwendung als auch zur stationären Anwendung geeignet.

Vorzugsweise ist die erfindungsgemäße Vorrichtung eine Vorrichtung zur quantitativen Analyse der Verschmutzung von Oberflächen von Solarzellen oder von Oberflächen von Photovoltaik-Modulen.

Eine bevorzugte Ausführungsform der erfindungsgemäßen Vorrichtung zeichnet sich dadurch aus, dass die Strahlungsquelleneinheit und die Strahlungsdetektoreinheit so von der Halterung fixiert sind, dass von der Strahlungsquelle abgestrahlte Strahlung, welche von einer zu analysierenden Oberfläche in Richtung des Strahlungsdetektors reflektiert und von dem Strahlungsdetektor detektiert werden kann, in einem Einfallswinkel von 40° bis 75°, bevorzugt in einem Einfallswinkel von 40° bis 50°, auf die zu analysierende Oberfläche trifft. Der Einfallswinkel ist dabei definiert als der Winkel zwischen der von der Strahlungsquelle abgestrahlten bzw. auf die zu analysierende Oberfläche treffenden Strahlung und dem Lot der zu analysierenden Oberfläche. Aufgrund eines solch speziellen Einfallswinkels können mit der erfindungsgemäßen Vorrichtung überraschenderweise insbesondere höhere Verschmutzungsgrade von PV-Modulen genau bestimmt werden. Somit erlaubt diese bevorzugte Ausführungsform eine besonders zuverlässige Aussage darüber, ob die zu analysierende Oberfläche des PV-Moduls bereits eine solch hohe Verschmutzung aufweist, dass sie gereinigt werden sollte.

Gemäß einer weiteren bevorzugten Ausführungsform ist die Halterung dazu geeignet, die Strahlungsquelleneinheit und die Strahlungsdetektoreinheit so über einer zu analysierenden Oberfläche zu fixieren, dass der Abstand zwischen der Strahlungsquelleneinheit und einem Punkt der zu analysierenden Oberfläche, an welchem die von der Strahlungsquelle abgestrahlte Strahlung in Richtung des Strahlungsdetektors reflektiert wird, 3 mm bis 20 mm, bevorzugt 8 mm bis 15 mm, beträgt und/oder der Abstand zwischen der Strahlungsdetektoreinheit und einem Punkt der zu analysierenden Oberfläche, an welchem die von der Strahlungsquelle abgestrahlte Strahlung in Richtung des Strahlungsdetektors reflektiert wird, 3 mm bis 20 mm, bevorzugt 8 mm bis 15 mm, beträgt. Ein solch geringer Abstand führt zu einer sehr hohen Strahlungsintensität und damit zu einer höheren Genauigkeit von mit der Vorrichtung durchgeführten Messungen, da ein höherer Anteil der von der Strahlungsquelle abgestrahlten Strahlung auf die zu analysierende Oberfläche trifft und ein höherer Anteil der von der zu analysierenden Oberfläche reflektierten Strahlung auf den Strahlungsdetektor fällt, und somit weniger Strahlung ungewollt verloren geht. Der jeweilige Abstand wird dabei von der Vorderkante der Strahlungsquelleneinheit bzw. der Strahlungsdetektoreinheit aus gemessen, d.h. von der Kante der Strahlungsquelleneinheit bzw. der Strahlungsdetektoreinheit aus, welche dem Bereich der zu analysierenden Oberfläche, an welchem die von der Strahlungsquelle abgestrahlte Strahlung reflektiert wird, am nächsten liegt.

In einer weiteren bevorzugten Ausführungsform der erfindungsgemäßen Vorrichtung sind die Strahlungsquelleneinheit und die Strahlungsdetektoreinheit durch die Halterung so fixiert, dass von der Strahlungsquelle abgestrahlte Strahlung auf direktem Weg auf eine zu analysierende Oberfläche treffen und dort zumindest teilweise einmal reflektiert werden kann und zumindest ein Teil dieser einmal reflektierten Strahlung auf direktem Weg auf die Strahlungsdetektoreinheit treffen und vom Strahlungsdetektor detektiert werden kann. Es ist besonders vorteilhaft, wenn die von der Strahlungsquelle ausgesandte Strahlung auf direktem Weg auf die zu analysierende Oberfläche und anschließend auf direktem Weg auf den Strahlungsdetektor trifft, da so der Anteil der Strahlung, der auf dem Weg verloren geht, minimal gehalten werden kann, wodurch die Genauigkeit der Messung erhöht wird. Hierbei sollte z.B. vermieden werden, dass die Strahlung auf ihrem Weg von der Strahlungsquelle zum Strahlungsdetektor mehr als einmal an der zu analysierenden Oberfläche reflektiert wird oder gar zusätzlich noch an anderen Oberflächen reflektiert wird. Zudem sollte z.B. vermieden werden, dass die Strahlung ein zusätzliches Hindernis, wie z.B. eine Glasscheibe, passieren muss. Durch jedes zusätzliche Treffen der Strahlung auf eine weitere Reflexionsfläche oder irgendeine andere Grenzfläche eines Hindernisses kann Strahlung ungewollt verloren gehen, was die Genauigkeit der Messung verringert.

Eine weitere bevorzugte Ausführungsform ist dadurch gekennzeichnet, dass die Strahlungsquelle eine LED ist, welche bevorzugt Strahlung mit einer Wellenlänge zwischen 300 und 1400 nm, besonders bevorzugt zwischen 600 nm und 700 nm, ganz besonders bevorzugt zwischen 620 nm und 640 nm, abgeben kann.

Vorzugsweise ist der in der Strahlungsdetektoreinheit enthaltene Detektor eine Photodiode.

Weiterhin ist es bevorzugt, dass das optische Filterelement und/oder das elektronische Filterelement ein Bandpassfilter ist. Mit diesem kostengünstigen Filterelement ist eine genaue Filterung des Signals bezüglich der Wellenlängen der Strahlung möglich. Der Bandpassfilter kann aus einem Hochpass und einem Tiefpass bestehen.

Eine weitere bevorzugte Ausführungsform zeichnet sich dadurch aus, dass die Strahlungsquelleneinheit einen Kollimator enthält und/oder die Strahlungsdetektoreinheit einen Kollimator enthält. Mit einem Kollimator kann ein paralleler Strahlungsverlauf erzeugt werden. Auf diese Weise kann die Festlegung der Größe der zu analysierenden Oberfläche aus den Abständen h1 und h2 und dem Öffnungswinkel der Strahlungsquelleneinheit und der Strahlungsdetektoreinheit erfolgen, wodurch zusätzlich die Genauigkeit von mit der erfindungsgemäßen Vorrichtung durchgeführten Messungen erhöht wird.

Vorzugsweise weist der Kollimator der Strahlungsquelleneinheit und/oder der Kollimator der Strahlungsdetektoreinheit jeweils eine Länge von 20 mm bis 40 mm, bevorzugt von 25 mm bis 35 mm auf.

Zudem ist es bevorzugt, dass der Kollimator der Strahlungsquelleneinheit und/oder der Kollimator der Strahlungsdetektoreinheit jeweils einen Durchmesser von 5 mm bis 15 mm, bevorzugt von 8 mm bis 12 mm, aufweist. Besonders bevorzugt kann der Kollimator der Strahlungsquelleneinheit einen Außendurchmesser von 5 mm bis 15 mm, bevorzugt von 8 mm bis 12 mm und/oder einen Innendurchmesser von 5 mm bis 15 mm, bevorzugt 8 mm bis 12 mm aufweisen. Alternativ oder zusätzlich kann der Kollimator der Strahlungsdetektoreinheit einen Außendurchmesser von 5 mm bis 15 mm, bevorzugt von 8 mm bis 12 mm und/oder einen Innendurchmesser von 5 mm bis 15 mm, bevorzugt 8 mm bis 12 mm aufweisen.

Gemäß einer weiteren bevorzugten Ausführungsform der erfindungsgemäßen Vorrichtung umfasst diese eine Verstärkerschaltung zur Vorverstärkung des im Strahlungsdetektor erzeugten Signals. Vorzugweise ist diese Verstärkerschaltung eine Frequenz-selektive Verstärkerschaltung. Nach der Vorverstärkung des im Strahlungsdetektor erzeugten Signals mit der Verstärkerschaltung kann auch noch eine weitere Verstärkung des vorverstärkten Signals erfolgen. Insbesondere bei schwacher Lichtintensität ist es sehr vorteilhaft, das im Strahlungsdetektor erzeugte Signal mithilfe einer Verstärkerschaltung noch vor einer Filterung mit einem elektronischen Filter zu verstärken. Der Verstärker kann z.B. aus einem Operationsverstärker und einem Rückkoppelwiderstand aufgebaut sein, wodurch eine sehr hohe Verstärkung des Signals ermöglicht wird. Durch die Verstärkung des Signals wird eine Erhöhung der Genauigkeit von mit der erfindungsgemäßen Vorrichtung durchgeführten Messungen erreicht.

In einer weiteren bevorzugten Ausführungsform sind die Strahlungsquelleneinheit und die Strahlungsdetektoreinheit nicht innerhalb eines gemeinsamen Gehäuses angeordnet sind. Dies ist vor allem im stationären Betrieb relevant, d.h. wenn die Vorrichtung über längere Zeit an einer zu analysierenden Oberfläche positioniert ist. Hierbei besteht nämlich die Gefahr, dass ein Teil der zu analysierenden Oberfläche durch ein Gehäuse der Vorrichtung abgedeckt wird, so dass sich dort weniger Verschmutzungen absetzen als auf den anderen Teilen der Oberfläche. Dies ist insbesondere dann von Nachteil, wenn es sich bei diesem abgedeckten Teil der Oberfläche um den für die Messung relevanten Bereich der Oberfläche handelt, wo die von der Strahlungsquelle abgestrahlte Strahlung reflektiert wird. Dies würde nämlich dazu führen, dass dieser Bereich eine andere, in der Regel geringere Verschmutzung aufweist, als der restliche Teil der Oberfläche, was in der Folge zu unbrauchbaren Ergebnissen der Messung führt, da die Verschmutzung des Messbereichs nicht mehr repräsentativ für die Verschmutzung der gesamten Oberfläche ist. Dadurch, dass die Strahlungsquelleneinheit und die Strahlungsdetektoreinheit nicht innerhalb eines gemeinsamen Gehäuses angeordnet sind, können diese Nachteile vermieden werden, da insbesondere der Bereich zwischen Strahlungsquelleneinheit und Strahlungsdetektoreinheit, welcher in der Regel über dem für die Messung relevanten Bereich liegen sollte, von einer möglichen Verdeckung durch ein Gehäuse freigehalten werden kann.

Die vorliegende Erfindung betrifft zudem ein Verfahren zur quantitativen Analyse der Verschmutzung von Oberflächen umfassend die folgenden Schritte:
a) Bestrahlung zumindest eines Teils einer zu analysierenden Oberfläche mit einer in einer Strahlungsquelleneinheit enthaltenden Strahlungsquelle, wobei die von der Strahlungsquelle abgestrahlte Strahlung direkt auf die zu analysierende Oberfläche trifft und zumindest teilweise von dieser reflektiert wird,
b) Detektion zumindest eines Teils der von der zu analysierenden Oberfläche reflektierten Strahlung mit einem in einer Strahlungsdetektoreinheit enthaltenem Strahlungsdetektor, wodurch ein Signal erzeugt wird,
c) Übertragung des erzeugten Signals zu einer Steuereinheit, wo das Signal ausgewertet wird,
wobei auf den Strahlungsdetektor treffende Strahlung zuvor mit einem optischen Filterelement gefiltert wird und/oder das in Schritt b) erzeugte Signal mithilfe eines elektronischen Filterelements gefiltert wird.

Mit dem erfindungsgemäßen Verfahren ist es möglich, die Verschmutzung auf Oberflächen, wie z.B. PV-Modulen, sowohl auf einfache und zuverlässige Weise als auch zeit- und kostensparend quantitativ zu analysieren.

Hierbei wird in Schritt a) des Verfahrens zumindest ein Teil einer zu analysierenden Oberfläche mit einer Strahlungsquelle, d.h. mit der Strahlung einer Strahlungsquelle, bestrahlt. Hierbei trifft die von der Strahlungsquelle abgestrahlte Strahlung direkt auf die zu analysierende Oberfläche und wird zumindest teilweise von dieser reflektiert. Zumindest ein Teil dieser von der zu analysierenden Oberfläche reflektierten Strahlung wird in Schritt b) mit einem Strahlungsdetektor detektiert, wodurch in diesem ein Signal erzeugt wird. Anschließend wird in Schritt c) dieses in Schritt b) erzeugte Signal zu einer Steuereinheit übertragen, wo das Signal schließlich ausgewertet wird.

Bei der Auswertung in der Steuereinheit kann dann beispielsweise das Signal in einen Messwert umgewandelt werden, der anschließend gespeichert wird und/oder über eine Anzeige angezeigt wird. Dieser Messwert lässt dann einen Rückschluss auf den Grad der Verschmutzung der Oberfläche zu, wobei zuvor noch eine Kalibrierung hinsichtlich des (regionalen) Anwendungsortes bzw. der an diesem Ort vorkommenden Staubart (z.B. Verschmutzung durch in China vorkommenden Staub oder durch in Saudi Arabien vorkommenden Staub) vorgenommen werden kann.

Um die Genauigkeit des Verfahrens zu erhöhen, können nacheinander mehrere Messungen, z.B. 80 bis 120 Messungen, durchgeführt werden, wobei schließlich der Mittelwert aller dabei erhaltenen Messwerte verwendet werden kann.

Erfindungsgemäß wird (sämtliche) auf den Strahlungsdetektor treffende Strahlung zuvor mit einem optischen Filterelement gefiltert und/oder wird das in Schritt b) erzeugte Signal mithilfe eines elektronischen Filterelements gefiltert. Das optische Filterelement soll hierbei die auf den Strahlungsdetektor treffende und von diesem detektierte Strahlung zuvor filtern, sodass lediglich die vom optischen Filterelement gefilterte Strahlung auf den Strahlungsdetektor trifft und von diesem detektiert wird. Das elektronische Filterelement soll hingegen das im Strahlungsdetektor erzeugte Signal filtern. Im erfindungsgemäßen Verfahren kann lediglich ein Filtervorgang, d.h. eine Filterung mit einem optischen Filterelement oder eine Filterung mit einem elektronischen Filterelement vorgenommen. Im erfindungsgemäßen Verfahren können aber auch mehrere Filtervorgänge, d.h. eine Filterung mit einem optischen Filterelement und eine Filterung mit einem elektronischen Filterelement vorgenommen werden.

Vorzugsweise ist das erfindungsgemäße Verfahren ein Verfahren zur quantitativen Analyse der Verschmutzung von Oberflächen von Solarzellen oder von Oberflächen von Photovoltaik-Modulen. In einer besonders bevorzugten Variante wird das erfindungsgemäße Verfahren während dem Betrieb der zu untersuchenden Solarzelle bzw. des zu untersuchenden Photovoltaik-Moduls, vorzugsweise Outdoor (bzw. im Freien), durchgeführt.

In einer bevorzugten Variante des erfindungsgemäßen Verfahrens trifft in Schritt a) die von der Strahlungsquelle abgestrahlte Strahlung in einem Einfallswinkel von 40° bis 75°, bevorzugt in einem Einfallswinkel von 40° bis 50°, auf die zu analysierende Oberfläche. Der Einfallswinkel ist dabei definiert als der Winkel zwischen der von der Strahlungsquelle abgestrahlten bzw. auf die zu analysierende Oberfläche treffenden Strahlung und dem Lot der zu analysierenden Oberfläche. Aufgrund eines solch speziellen Einfallswinkels können im erfindungsgemäßen Verfahren überraschenderweise insbesondere höhere Verschmutzungsgrade von PV-Modulen genau bestimmt werden. Somit erlaubt diese bevorzugte Ausführungsvariante eine besonders zuverlässige Aussage darüber, ob die zu analysierende Oberfläche des PV-Moduls bereits so stark verschmutzt ist, dass sie gereinigt werden sollte.

Eine weitere bevorzugte Variante des erfindungsgemäßen Verfahrens ist dadurch gekennzeichnet, dass der Abstand zwischen der Strahlungsquelleneinheit und einem Punkt der zu analysierenden Oberfläche, an welchem die von der Strahlungsquelle abgestrahlte Strahlung in Richtung des Strahlungsdetektors reflektiert wird, 3 mm bis 20 mm, bevorzugt 8 mm bis 15 mm beträgt und/oder der Abstand zwischen der Strahlungsdetektoreinheit und einem Punkt der zu analysierenden Oberfläche, an welchem die von der Strahlungsquelle abgestrahlte Strahlung in Richtung des Strahlungsdetektors reflektiert wird, 3 mm bis 20 mm, bevorzugt 8 mm bis 15 mm beträgt. Ein solch geringer Abstand führt zu einer sehr hohen Strahlungsintensität und damit zur höheren Genauigkeit der Messung, da ein höherer Anteil der von der Strahlungsquelle abgestrahlten Strahlung auf die zu analysierende Oberfläche trifft und ein höherer Anteil der von der zu analysierenden Oberfläche reflektierten Strahlung auf den Strahlungsdetektor fällt, und somit weniger Strahlung ungewollt verloren geht. Der jeweilige Abstand wird dabei von der Vorderkante der Strahlungsquelleneinheit bzw. der Strahlungsdetektoreinheit aus gemessen, d.h. von der Kante der Strahlungsquelleneinheit bzw. der Strahlungsdetektoreinheit aus, welcher dem Bereich der zu analysierenden Oberfläche, an welchem die von der Strahlungsquelle abgestrahlte Strahlung reflektiert wird, am nächsten liegt.

Gemäß einer weiteren bevorzugten Variante des erfindungsgemäßen Verfahrens weist die von der Strahlungsquelle abgestrahlte Strahlung eine Wellenlänge zwischen 300 nm und 1400 nm, bevorzugt zwischen 600 nm und 700 nm, besonders bevorzugt zwischen 620 nm und 640 nm, auf.

Im erfindungsgemäßen Verfahren ist es zudem bevorzugt, dass das in Schritt b) erzeugte Signal mithilfe einer Verstärkerschaltung vorverstärkt wird. Vorzugweise ist diese Verstärkerschaltung eine Frequenz-selektive Verstärkerschaltung. Nach der Vorverstärkung des im Strahlungsdetektor erzeugten Signals mit der Verstärkerschaltung kann auch noch eine weitere Verstärkung des vorverstärkten Signals erfolgen. Insbesondere bei schwacher Lichtintensität ist es sehr vorteilhaft, das in Schritt b) erzeugte Signal mithilfe einer Verstärkerschaltung noch vor einer möglichen Filterung dem elektronischen Filterelement zu verstärken. Der Verstärker kann z.B. aus einem Operationsverstärker und einem Rückkoppelwiderstand aufgebaut sein, wodurch eine sehr hohe Verstärkung des Signals ermöglicht wird. Durch die Verstärkung des Signals wird eine Erhöhung der Genauigkeit der gemäß dem erfindungsgemäßen Verfahren durchgeführten Analyse erreicht.

Weiterhin ist es bevorzugt, dass die zu analysierende Oberfläche die Oberfläche einer Solarzelle oder die Oberfläche eines Photovoltaik-Moduls ist.

Vorzugsweise wird das erfindungsgemäße Verfahren mit der erfindungsgemäßen Vorrichtung zur quantitativen Analyse der Verschmutzung von Oberflächen, bevorzugt von Oberflächen von Solarmodulen, besonders bevorzugt von Oberflächen von Solarmodulen im laufenden Betrieb Outdoor (bzw. im Freien), durchgeführt. Eine Verwendung Indoor (bzw. im Inneren eines Gebäudes) zur quantitativen Beurteilung künstlich induzierter Verschmutzung ist ebenfalls möglich.

Zudem dient die erfindungsgemäße Vorrichtung vorzugsweise der Durchführung des erfindungsgemäßen Verfahrens zur quantitativen Analyse der Verschmutzung von Oberflächen.

Die vorliegende Erfindung wird anhand der nachfolgenden Figuren und Beispiele näher erläutert, ohne die Erfindung auf die speziell dargestellten Parameter zu beschränken.

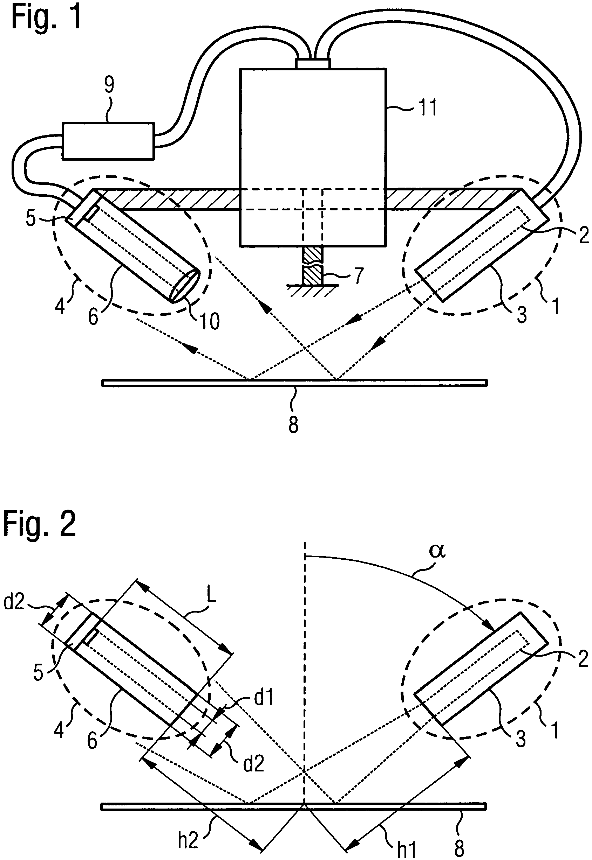

In Fig. 1 ist eine spezielle Ausführungsform der erfindungsgemäßen Vorrichtung gezeigt. Die Vorrichtung umfasst eine Strahlungsquelleneinheit 1 mit einer Strahlungsquelle 2 und einem Kollimator 3 sowie eine Strahlungsdetektoreinheit 4 mit einem Strahlungsdetektor 5 und einem Kollimator 6. Bei der Strahlungsquelle 2 handelt es sich um eine LED. Als Strahlungsdetektor 5 wird eine Photodiode verwendet. Zudem umfasst die Vorrichtung eine Halterung 7. Durch die Halterung 7 sind die Strahlungsquelleneinheit 1 und die Strahlungsdetektoreinheit 4 so fixiert, dass von der Strahlungsquelle 2 abgestrahlte Strahlung direkt auf eine zu analysierende Oberfläche 8 treffen und von dieser zumindest teilweise reflektiert werden kann, wobei zumindest ein Teil der so reflektierten Strahlung vom Strahlungsdetektor 5 detektiert werden kann. Im Weiteren umfasst die Vorrichtung eine Frequenz-selektive Verstärkerschaltung 9 zur Verstärkung des im Strahlungsdetektor 5 erzeugten Signals sowie ein optisches Filterelement 10 zur Filterung (sämtlicher) von auf den Strahlungsdetektor treffender Strahlung. Als optisches Filterelement 10 wird ein Bandpassfilter verwendet. Das optische Filterelement 10 ist in der Strahlungsdetektoreinheit 4 enthalten. Ferner umfasst die Vorrichtung eine Steuereinheit 11 zur Steuerung der Vorrichtung sowie zur Auswertung des vom Strahlungsdetektor 5 erzeugten Signals.

In Fig. 2 ist lediglich ein Ausschnitt einer speziellen Ausführungsform der erfindungsgemäßen Vorrichtung gezeigt, wobei die Strahlungsquelleneinheit 1 mit der Strahlungsquelle 2 und dem Kollimator 3 sowie die Strahlungsdetektoreinheit 4 mit dem Strahlungsdetektor 5 und dem Kollimator 6 dargestellt sind. Die Strahlungsquelleneinheit 1 und die Strahlungsdetektoreinheit 4 sind durch die nicht dargestellte Halterung 7 so über einer zu analysierenden Oberfläche 8 fixiert, dass die von der Strahlungsquelle 2 abgestrahlte Strahlung direkt auf die zu analysierende Oberfläche 8 trifft und von dieser zumindest teilweise reflektiert wird, wobei zumindest ein Teil der so reflektierten Strahlung auf den Strahlungsdetektor 5 fällt und somit von diesem detektiert werden kann. Zudem sind die Strahlungsquelleneinheit 1 und die Strahlungsdetektoreinheit 4 so von der Halterung 7 fixiert, dass die von der Strahlungsquelle 2 abgestrahlte Strahlung, welche von der zu analysierenden Oberfläche 8 in Richtung des Strahlungsdetektors 5 reflektiert und von dem Strahlungsdetektor 5 detektiert werden kann, in einem speziellen Einfallswinkel a auf die zu analysierende Oberfläche 8 trifft. Der Einfallswinkel a liegt dabei in einem Bereich von 40° bis 75°, vorzugsweise von 40° bis 50°. Ferner sind die Strahlungsquelleneinheit 1 und die Strahlungsdetektoreinheit 4 durch die Halterung 7 so über der zu analysierenden Oberfläche 8 fixiert, dass der Abstand h₁ zwischen der Strahlungsquelleneinheit 1 und einem Punkt der zu analysierenden Oberfläche 8, an welchem die von der Strahlungsquelle 2 abgestrahlte Strahlung in Richtung des Strahlungsdetektors 5 reflektiert wird, 3 mm bis 20 mm beträgt und der Abstand h₂ zwischen der Strahlungsdetektoreinheit 4 und einem Punkt der zu analysierenden Oberfläche, an welchem die von der Strahlungsquelle 2 abgestrahlte Strahlung in Richtung des Strahlungsdetektors 5 reflektiert wird, 3 mm bis 20 mm beträgt.

Die in Fig. 2 gezeigten Kollimatoren 3 und 6 weisen eine spezielle Länge l, einen speziellen Innendurchmesser d₁ und einen speziellen Außendurchmesser d₂ auf. Die Länge l liegt in einem Bereich von 20 mm bis 40 mm. Der Innendurchmesser d₁ sowie der Außendurchmesser d₂ liegen jeweils in einem Bereich von 5 mm bis 15 mm.

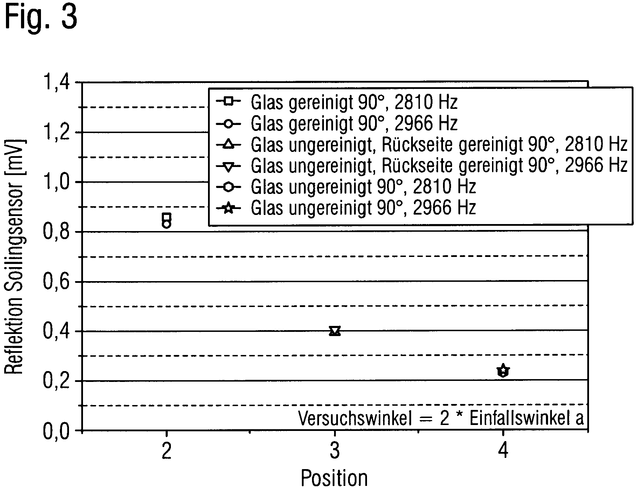

In Fig. 3 sind die Ergebnisse verschiedener Messungen, welche mit der erfindungsgemäßen Vorrichtung bzw. gemäß dem erfindungsgemäßen Verfahren durchgeführt wurden, in einem Graphen dargestellt. Hierbei wurde die Verschmutzung der Oberfläche einer Glasscheibe an drei verschiedenen Stellen der Glasscheibe quantitativ analysiert, wobei die drei Stellen der Glasscheibe unterschiedlich stark verschmutzt sind. Bei der ersten Stelle (Position 2) der Glasscheibe handelt es sich um eine gereinigte Stelle, d.h. um eine Stelle ohne Verschmutzung. Bei der zweiten Stelle (Position 3) handelt es sich um einen ungereinigte Stelle, d.h. eine verschmutzte Stelle. An dieser zweiten Stelle ist jedoch lediglich die Vorderseite der Glasscheibe verschmutzt, wohingegen die Rückseite der Glasscheibe gereinigt ist, d.h. keine Verschmutzung aufweist. Bei der dritten Stelle (Position 4) handelt es sich ebenfalls um eine ungereinigte Stelle, d.h. eine verschmutzte Stelle. An dieser dritten Stelle sind jedoch sowohl die Vorderseite als auch die Rückseite der Glasscheibe verschmutzt. Der Einfallswinkel a betrug bei allen Messungen jeweils 45°, was einem Versuchswinkel (2*a) von 90° entspricht. Ferner wurden die Messungen an den drei Stellen jeweils bei zwei verschiedenen Arbeitsfrequenzen des elektrischen Signals und somit auch des optischen Signals durchgeführt, nämlich 2810 Hz und 2966 Hz.

Im Graphen der Fig. 3 sind die gemessenen Werte für die Reflexion in mV in Abhängigkeit von der jeweiligen untersuchten Stelle bzw. Position auf der Glasscheibe angegeben. Aus der Abbildung geht letztlich deutlich hervor, dass an der gereinigten bzw. nicht verschmutzten Stelle (Position 2) der Glasscheiben ein differenter Wert für die Reflexion gemessen wird als an der ungereinigten bzw. verschmutzten Stelle (Position 4). Somit kann durch Verwendung der erfindungsgemäßen Vorrichtung bzw. des erfindungsgemäßen Verfahrens die Verschmutzung der Glasscheibe quantitativ analysiert werden.

## Patentansprüche

1. Vorrichtung zur quantitativen Analyse der Verschmutzung von Oberflächen, umfassend eine mindestens eine Strahlungsquelle (2) enthaltende Strahlungsquelleneinheit (1), eine mindestens einen Strahlungsdetektor (5) enthaltende Strahlungsdetektoreinheit (4), eine Halterung (7), durch welche die Strahlungsquelleneinheit (1) und die Strahlungsdetektoreinheit (4) so fixiert sind, dass von der Strahlungsquelle (2) abgestrahlte Strahlung direkt auf eine zu analysierende Oberfläche (8) treffen und von dieser zumindest teilweise reflektiert werden kann und zumindest ein Teil der so reflektierten Strahlung vom Strahlungsdetektor (5) detektiert werden kann, und eine Steuereinheit (11) zur Steuerung der Vorrichtung sowie zur Auswertung eines im Strahlungsdetektor (5) erzeugten Signals, wobei die Vorrichtung zudem ein optisches Filterelement (10) zur Filterung von auf den Strahlungsdetektor (5) treffender Strahlung und/oder ein elektronisches Filterelement zur Filterung des im Strahlungsdetektor (5) erzeugten Signals umfasst.

2. Vorrichtung nach dem vorhergehenden Anspruch, **dadurch gekennzeichnet, dass** die Strahlungsquelleneinheit (1) und die Strahlungsdetektoreinheit (4) so von der Halterung (7) fixiert sind, dass von der Strahlungsquelle (2) abgestrahlte Strahlung, welche von einer zu analysierenden Oberfläche in Richtung der Strahlungsdetektors (5) reflektiert und von dem Strahlungsdetektor (5) detektiert werden kann, in einem Einfallswinkel von 40° bis 75°, bevorzugt in einem Einfallswinkel von 40° bis 50°, auf die zu analysierende Oberfläche (8) trifft.

3. Vorrichtung nach einem der vorhergehenden Ansprüche, **dadurch gekennzeichnet, dass** die Halterung (7) dazu geeignet ist, die Strahlungsquelleneinheit (1) und die Strahlungsdetektoreinheit (4) so über einer zu analysierenden Oberfläche (8) zu fixieren, dass der Abstand zwischen der Strahlungsquelleneinheit (1) und einem Punkt der zu analysierenden Oberfläche (8), an welchem die von der Strahlungsquelle (2) abgestrahlte Strahlung in Richtung des Strahlungsdetektors (5) reflektiert wird, 3 mm bis 20 mm, bevorzugt 8 mm bis 15 mm, beträgt und/oder der Abstand zwischen der Strahlungsdetektoreinheit (1) und einem Punkt der zu analysierenden Oberfläche (8), an welchem die von der Strahlungsquelle (2) abgestrahlte Strahlung in Richtung des Strahlungsdetektors (5) reflektiert wird, 3 mm bis 20 mm, bevorzugt 8 mm bis 15 mm, beträgt.

4. Vorrichtung nach einem der vorhergehenden Ansprüche, **dadurch gekennzeichnet, dass** die Strahlungsquelleneinheit (1) und die Strahlungsdetektoreinheit (4) durch die Halterung (7) so fixiert sind, dass von der Strahlungsquelle (2) abgestrahlte Strahlung auf direktem Weg auf eine zu analysierende Oberfläche (8) treffen und dort zumindest teilweise einmal reflektiert werden kann und zumindest ein Teil dieser einmal reflektierten Strahlung auf direktem Weg auf die Strahlungsdetektoreinheit (4) treffen und vom Strahlungsdetektor (5) detektiert werden kann.

5. Vorrichtung nach einem der vorhergehenden Ansprüche, **dadurch gekennzeichnet, dass** die Strahlungsquelle (2) eine LED ist, welche bevorzugt Strahlung mit einer Wellenlänge zwischen 300 und 1400 nm, besonders bevorzugt zwischen 600 nm und 700 nm, ganz besonders bevorzugt zwischen 620 nm und 640 nm, abgeben kann.

6. Vorrichtung nach einem der vorhergehenden Ansprüche, **dadurch gekennzeichnet, dass** das Filterelement (10) zur Filterung eines im Lichtdetektor erzeugten Signals ein Bandpassfilter ist.

7. Vorrichtung nach einem der vorhergehenden Ansprüche, **dadurch gekennzeichnet, dass** die Strahlungsquelleneinheit (1) einen Kollimator (3) enthält und/oder die Strahlungsdetektoreinheit (4) einen Kollimator (6) enthält, wobei vorzugsweise der Kollimator (3) der Strahlungsquelleneinheit (1) und/oder der Kollimator (6) der Strahlungsdetektoreinheit (4)
- jeweils eine Länge von 20 mm bis 40 mm, bevorzugt von 25 mm bis 35 mm, aufweist, und/oder
- jeweils einen Durchmesser von 5 mm bis 15 mm, bevorzugt von 8 mm bis 12 mm, aufweist.

8. Vorrichtung nach einem der vorhergehenden Ansprüche, **dadurch gekennzeichnet, dass** sie eine Verstärkerschaltung (9) zur Vorverstärkung des im Strahlungsdetektor (5) erzeugten Signals umfasst, wobei die Verstärkerschaltung (9) vorzugsweise eine Frequenz-selektive Verstärkerschaltung ist.

9. Vorrichtung nach einem der vorhergehenden Ansprüche, **dadurch gekennzeichnet, dass** die Strahlungsquelleneinheit (1) und die Strahlungsdetektoreinheit (4) nicht innerhalb eines gemeinsamen Gehäuses angeordnet sind.

10. Verfahren zur quantitativen Analyse der Verschmutzung von Oberflächen umfassend die folgenden Schritte:
a) Bestrahlung zumindest eines Teils einer zu analysierenden Oberfläche (8) mit einer in einer Strahlungsquelleneinheit (1) enthaltenen Strahlungsquelle (2), wobei die von der Strahlungsquelle (2) abgestrahlte Strahlung direkt auf die zu analysierende Oberfläche (8) trifft und zumindest teilweise von dieser reflektiert wird,
b) Detektion zumindest eines Teils der von der zu analysierenden Oberfläche (8) reflektierten Strahlung mit einem in einer Strahlungsdetektoreinheit (4) enthaltenem Strahlungsdetektor (5), wodurch ein Signal erzeugt wird,
c) Übertragung des erzeugten Signals zu einer Steuereinheit (11), wo das Signal ausgewertet wird,
wobei auf den Strahlungsdetektor (5) treffende Strahlung zuvor mit einem optischen Filterelement (10) gefiltert wird und/oder das in Schritt b) erzeugte Signal mithilfe eines elektronischen Filterelements gefiltert wird.

11. Verfahren nach dem vorhergehenden Anspruch, **dadurch gekennzeichnet, dass** in Schritt a) die von der Strahlungsquelle (2) abgestrahlte Strahlung in einem Einfallswinkel von 40° bis 75°, bevorzugt in einem Einfallswinkel von 40° bis 50°, auf die zu analysierende Oberfläche (8) trifft.

12. Verfahren nach einem Ansprüche 10 oder 11, **dadurch gekennzeichnet, dass** der Abstand zwischen der Strahlungsquelleneinheit (1) und einem Punkt der zu analysierenden Oberfläche (8), an welchem die von der Strahlungsquelle (2) abgestrahlte Strahlung in Richtung des Strahlungsdetektors (5) reflektiert wird, 3 mm bis 20 mm, bevorzugt 8 mm bis 15 mm beträgt und/oder der Abstand zwischen der Strahlungsdetektoreinheit (4) und einem Punkt der zu analysierenden Oberfläche (8), an welchem die von der Strahlungsquelle (2) abgestrahlte Strahlung in Richtung des Strahlungsdetektors (5) reflektiert wird, 3 mm bis 20 mm, bevorzugt 8 mm bis 15 mm beträgt.

13. Verfahren nach einem der Ansprüche 10 bis 12, **dadurch gekennzeichnet, dass** die von der Strahlungsquelle (3) abgestrahlte Strahlung eine Wellenlänge zwischen 300 nm und 1400 nm, bevorzugt zwischen 600 nm und 700 nm, besonders bevorzugt zwischen 620 nm und 640 nm, aufweist, und/oder dass das in Schritt b) erzeugte Signal mithilfe einer Verstärkerschaltung (9), vorzugsweise einer Frequenz-selektiven Verstärkerschaltung, vorverstärkt wird.

14. Verfahren nach einem der Ansprüche 10 bis 13, **dadurch gekennzeichnet, dass** die zu analysierende Oberfläche (8) die Oberfläche einer Solarzelle oder eines Photovoltaik-Moduls ist.

15. Verfahren nach einem der Ansprüche 10 bis 14, **dadurch gekennzeichnet, dass** es mit einer Vorrichtung gemäß einem der Ansprüche 1 bis 9 durchgeführt wird.
